# EUROPEAN PATENT APPLICATION

(11) **EP 3 183 968 A1**
(43) Date of publication of application: **28.06.2017**
(21) Application number: 15307087.5
(22) Date of filing: 21.12.2015
(51) Int. Cl.: A01N 51/00, A01N 53/00, A01N 43/40, A01N 43/22, A01P 7/04

(54) **METHODS AND MEANS FOR THE ERADICATION OF FLEAS**

(71) Applicant: Ceva Santé Animale, 33500 Libourne Cedex (FR)
(72) Inventor: VARLOUD, Marie, 33500 Libourne (FR)
(74) Representative: Cabinet Becker et Associés

(57) **Abstract**

The invention relates to the use of a veterinary composition comprising an effective dose of a fast kill compound, such as a neonicotinoid compound, for the eradication of fleas from the living or accommodation areas of companion animals.

## Description

### FIELD OF THE INVENTION

The present invention relates to the use of veterinary compositions and methods in the field of parasitology and, more particularly, for eradicating fleas from the living or accommodation areas of companion animals.

### BACKGROUND OF THE INVENTION

The control of parasites, and especially of fleas, in companion animals is of major importance in a prospect for improving their welfare and preventing the risks of developing diseases related to flea infestation.

In this context, compositions comprising one or several active ingredients as insecticides have been developed for controlling fleas. Generally, it is attempted to control the companion animals themselves, either with the use of flea collars containing various insecticides, or by topical application of preparations based on insecticides. However, the fleas are not necessarily killed and can remain present in the environment of the animal, and especially, in the living or accommodation areas of companion animals such as boxes, kennels, cages or catteries, as well as other facilities housing companion animals. This is especially true when the animal is treated with a parasiticide with knock-down properties and without a sufficient speed of kill. The knocked-down insects usually fall from the animal and, because they are not exposed anymore to the treated surface, they recover. As a consequence, surviving fleas may re-infest the companion animals or other hosts. This phenomenon also promotes the selection of parasites, which become less and less susceptible to the parasiticide.

Therefore, it only remains to regularly treat the companion animals with high concentrations of insecticides. However such repeated treatments are quite expensive and result in a greater likehood that the animal will suffer adverse effects from treatment such as local appendage disorders (local hair loss, itching, redness) but also more systemic effects such as lethargy, gastrointestinal disorders, excessive salivation and neurotoxicity. Also, a flea resistance may appear when inappropriate concentrations of insecticides are used, limiting thereby their efficacy.

An alternative is to apply permanently the insecticides in the living or accommodation areas of companion animals. However, such application is restrictive and exhibits an undoubted toxicity in the long term.

Therefore, there is still a need to develop insecticide compositions and methods to eradicate fleas in the environment of companion animals while preserving their welfare and good health.

### SUMMARY OF THE INVENTION

In this context, the inventors surprisingly demonstrated that a veterinary composition comprising an effective dose of a fast kill compound such as, for example, a neonicotinoid, a spinosyn and/or a pyridincarboxamid compound can eradicate the fleas from the living or accommodation areas of companion animals while being applied onto said companion animal. More particularly, the inventors have surprisingly demonstrated that such compositions could kill between 10 and 20 times more fleas than compositions without a fast kill compound, more particularly without a neonicotinoid compound.

The present invention therefore relates to a use of a veterinary composition comprising an effective dose of a fast kill compound for the eradication of fleas from the living or accommodation areas of companion animals.

The present invention also relates to a method for the eradication of fleas from the living or accommodation areas of companion animals comprising the step of administering topically a veterinary composition comprising a fast kill compound in a companion animal.

In a preferred embodiment, the fast kill compound is a neonicotinoid, a spinosyn, and/or a pyridincarboxamid compound, derivatives, metabolites or salts thereof, preferably a neonicotinoid compound, derivatives, metabolites or salts thereof. In a more preferred embodiment, the fast kill compound is dinotefuran, derivatives, metabolites or salts thereof.

In a particular embodiment, the composition further comprises an effective dose of a pyrethroid and/or an effective dose of a formamidine compound and/or an effective dose of an insect growth regulator.

More preferably, the composition further comprises an effective dose of a pyrethroid and/or an effective dose of an insect growth regulator.

In this particular embodiment, the weight ratio of the pyrethroid compound to the neonicotinoid compound ranges from 4 to 15, preferably from 6 to 9, more preferably from 7 to 8. In this particular embodiment, the weight ratio of the insect growth regulator to the neonicotinoid compound ranges from 0.05 to 0.12, preferably from 0.06 to 0.1, more preferably from 0.07 to 0.09.

Preferably, the pyrethroid compound is permethrin, derivatives, metabolites or salts thereof.

Preferably, the insect growth regulator is methoprene or pyriproxyfen, more preferably pyriproxyfen.

In another particular embodiment, the composition of the invention is a spot-on, a pour-on or a line-on composition, preferably a spot-on composition.

In a further particular embodiment, the companion animal is a non-human mammal or a bird. More preferably the companion animal is a dog or a cat, and, even more preferably, a dog.

In a further particular embodiment, the fleas are Siphonapterae such as *Ctenocephalides felis, Ctenocephalides canis* or *Pulex irritans,* preferably *Ctenocephalides felis*.

Another object of the invention is a composition as defined herein for use, for preventing any disease caused by fleas, preferably allergy dermatitis, in a companion animal.

A further object of the invention is a kit comprising one or several packaging units, said packaging units comprising an effective dose of a fast kill compound, optionally a pyrethroid and/or a formamidine compound and/or an insect growth regulator, as a combined preparation for simultaneous, separate or sequential use, for the eradication of fleas from the living or accommodation areas of companion animals.

In a preferred embodiment, the kit further comprises a package leaflet or user instruction including the information that said preparation is to be used for eradicating fleas from the living or accommodation areas of companion animals, preferably in a dog or a cat.

### LEGEND TO THE FIGURES

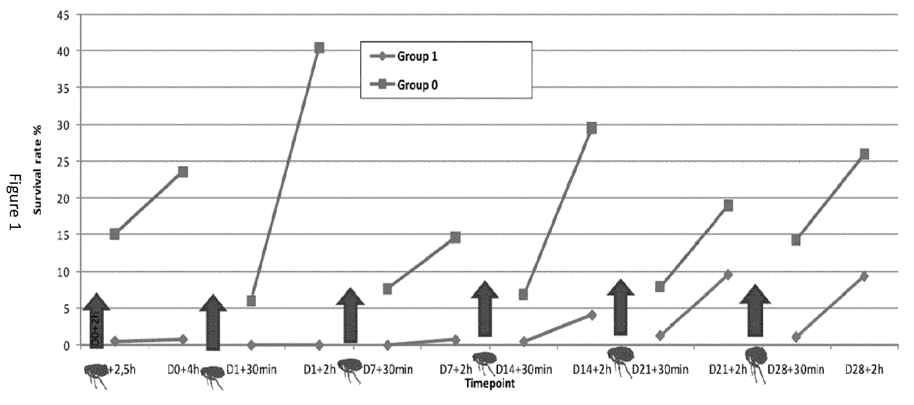

**Figure 1****:** Comparative evaluation of the survival rate on dislodged fleas after administering of a topical combination of 46.6 mg/kg of body weight (BW) permethrin and 0.60 mg/kg BW pyriproxyfen (group 0, curve with squares) versus a topical combination of 6.4 mg/kg BW dinotefuran, 46.6 mg/kg BW permethrin and 0.60 mg/kg BW pyriproxyfen (group 1, curve with diamonds).

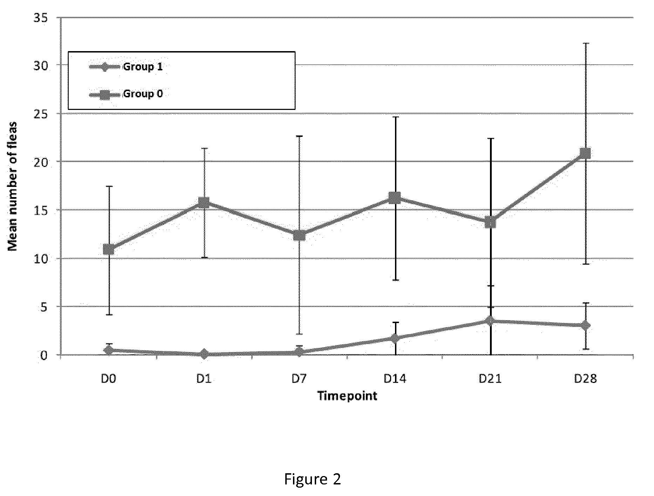

**Figure 2****:** Comparative evaluation of the mean number of live dislodged fleas after administering of a topical combination of 46.6 mg/kg BW permethrin and 0.60 mg/kg BW pyriproxyfen (group 0, curve with squares) versus a topical combination of 6.4 mg/kg BW dinotefuran, 46.6 mg/kg BW permethrin and 0.60 mg/kg BW pyriproxyfen (group 1, curve with diamonds).

### DETAILED DESCRIPTION OF THE INVENTION

The present invention herein provides a use of a veterinary composition comprising an effective dose of a fast kill compound for the eradication of fleas from the living or accommodation areas of companion animals.

As used herein, a "fast kill compound" is a compound administered in standard doses, such as 1-50 mg/kg of body weight, able to kill or eradicate at least 95 % of fleas four hours after its application in a companion animal.

In this context, a fast kill compound includes, without limitation, a neonicotinoid compound, a spinosyn compound, and a pyridincarboxamid compound.

Neonicotinoid compounds are a class of neuro-active insecticides, which are chemically close to nicotine. They exhibit an agonist activity for the nicotinic acetylcholine receptors agonists and cause a strong stimulation of nerve cells involving paralysis and death of the parasite with affecting the host animal receptors making them relatively innocuous to the mammals and humans. They have been introduced on market in the 90's and are particularly active against ectoparasites such as fleas, flies and lice. Typical neonicotinoid compounds include without limitation imidacloprid, thiamethoxam, clothianidin, acetamiprid, thiacloprid, dinotefuran, nitenpyram, imidaclothiz, huanyanglin, guadipyr, paichongding, cycloxaprid and metabolites, derivatives or salts thereof.

A preferred neonicotinoid compound of the invention is dinotefuran, derivatives, metabolites or salts thereof. As used in the present description, the term "dinotefuran" can also comprise its derivatives, analogs, metabolites, or salts.

Dinotefuran has been described by the company Mitsui Toatsu Chemicals, Inc. in EP 0 649 845 and has been developed for controlling insect pests. Dinotefuran, also called 2-methyl-1-nitro-3-[(tetrahydro-3-furanyl) methyl] guanidine, has the following formula:

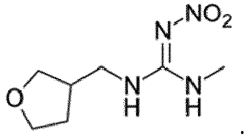

Neonicotinoids and especially dinotefuran are subjected to metabolism in non-human mammals and as a result, metabolites may induce a long-lasting action of neonicotinoids against ectoparasites. The principal metabolic pathways of dinotefuran in mammals involve N-demethylation, nitro reduction, and N-methylene hydroxylation accompanied by amine cleavage. The metabolites of dinotefuran comprise the compounds as disclosed by Simon-Delso et al. (Systemic insecticides (neonicotinoids and fipronil): trends, uses, mode of action and metabolites, Environ. Sci. Pollut. Res., 2015, 22:5-34) and by Ford KA and Casida JE (Unique and common metabolites of thiamethoxam, clothianidin, and dinotefuran in mice, Chem. Res. Toxicol., 2006, 19:1549-1556; Neonicotinoid metabolism: compounds, substituents, pathways, enzymes, organisms, and relevance, J. Agric. Food Chem., 2011, 59:2923-2931) and FAO dinotefuran (*http:*//*www.fao.org*/*fileadmin*/*templates*/*agphome*/*documents*/ *PestsPesticides*/*JMPR*/*Evaluation12*/*Dinotefuran.pdf*). Typically, the metabolite of dinotefuran comprise, without limitation, N-desmethyl dinotefuran (2-nitro-1-(tetrahydro-3-furylmethyl)guanidine), DIN-NNO, DIN-dm-NNO, DIN-NNH2, 1-methyl-3-(tetrahydro-3-furylmethyl)guanidine, 3-(tetrahydro-3-furylmethyl)guanidine, 1-methyl-3-(tetrahydro-3-furylmethyl)urea, 3-(tetrahydro-3-furylmethyl)urea, 2-hydroxy-dinotefuran, 4-hydrox-dinotefuran, 1,3-diazinane aminocarbinol, DIN-b (derivative of DIN-dm), DIN-e (guanidine derivative of DIN-a), DIN-f (guanidine derivative of DIN-b), DIN-g (derivative of DIN-5-OH), DIN-h (desmethyl-g), DIN-I (nitroso derivative of DIN-g), DIN-j (nitrosoderivative of DIN-h), DIN-k (guanidine derivative of DIN-h), tetrahydrofuran carboxaldehyde (3-furfural), tetrahydrofuran alcohol (3-furfuryl alcohol), tetrahydrofuran-3carboxylic acid, 4-hydroxy-tetrahydrofuran-3-carboxylic acid, tetrahydrofuran-3-yl-methylamine, 1-[4-hydroxy-2-(hydroxymethyl)butyl]-3-methyl-2-nitroguanidine, and 3-hydroxy dinotefuran.

Typically, the derivatives or analogs of dinotefuran comprise all the compounds as disclosed in the EP 0 649 845 patent. More particularly, the derivatives or analogs of dinotefuran comprise, without limitation, 1-[{(tetrahydro-3-furanyl)methyl}amino]-1-methylamino-2-nitroethylene, 1-[{(tetrahydro-3-furanyl)methyl}amino]-1-ethylamino-2-nitroethylene, 1-[{(tetrahydro-3-furanyl)methyl}amino]-1-dimethylamino-2-nitroethylene, 1-[1{(tetrahydro-3-furanyl)methyl}amino]-1-(1-pyrrolidinyl)-2-nitroethylene, 1-[N-{(tetrahydro-3-furanyl)methyl}-N-methylamino]-1-methylamino-2-nitroethylene, 1-[N-{(tetrahydro-3-furanyl)methyl}-N-propylamino]-1-methylamino-2-nitroethylene, 1-[N-{(tetrahydro-3-furanyl)methyl}-N-propylamino]-1-ethylamino-2-nitroethylene, 1-{(tetrahydro-3-furanyl)methyl}-2-nitro-3-methylguanidine N-{(tetrahydro-3-furanyl)-methyl}-N-(methyl)nitroguanidine, 1-{(tetrahydro-3-furanyl)methyl}-1-ethyl-2-nitro-3-methylguanidine, N-(tetrahydro-3-furanyl)-methyl-N'-cyano(methylthio)formamidine, N-cyano-N'-{(tetrahydro-3-furanyl)methyl}acetamidine, N-cyano-N'-{(tetrahydro-3-furanyl)methyl}-N-methylacetamidine, N-[4-{(2-methyl)tetrahydrofuranyl}methyl]-N'-methyl-N"-nitroguanidine, 1-{(tetrahydro-3-furanyl)methyl}-1,2-dicyclohexylcarbonyl-2-methyl-3-nitroguanidine, 1-{(tetrahydro-3-furanyl)methyl}-1,2-diethylcarbonyl-2-methyl-3-nitroguanidine, 1-{(tetrahydro-3-furanyl)methyl}-1,2-dimethoxycarbonyl-2-methyl-3-nitroguanidine, and 1-{(tetrahydro-3-furanyl)methyl}-1,2-dibenzoyl-2-methyl-3-nitroguanidine.

Spinosyn compounds are a class of insecticides exhibiting a neural mechanism action. Spinosad, which has been found in the bacterial species *Saccharopolyspora spinosa,* contains a mixture of two spinosoids, spinosyn A and spinosyn B in an approximately 17:3 ratio. Spinosad is currently used in preparations to treat C. Felis in cats and dogs at optimal doses around 30 mg/kg of body weight (Qiao et al., Veterinary parasitology, 2007, 150, 345-351).

Pyridincarboxamid compounds are a class of pyridines substituted with at least one carboxamide or one N-substituted carboxamide group. They have been introduced on market in the 2000's as novel systemic insecticide. Typical pyridincarboxamid compounds include without limitation boscalid, caerulomycin, caerulomycinamide, diflufenican, flonicamid, isonicotinamide, motesanib, nicorandil, nicotinamide, picolinamide, regorafenib, sorafenib, and the metabolites, derivatives or salts thereof. A preferred pyridincarboxamid used in the compositions of the invention is flonicamid and derivatives, metabolites or salts thereof. As used herein, the term "flonicamid" also comprises derivatives, analogs, metabolites, or salts. Flonicamid has been described by the company Ishihara Sangyo Kaisha Ltd in EP0580374 and has been developed for controlling insect pests. Flonicamid, also called N-cyanomethyl-4-(trifluoromethyl) nicotinamide, has the following formula:

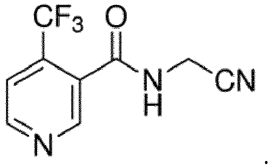

As used herein the expression "eradication of fleas" also corresponds to the elimination or the killing of fleas.

As used herein, the "living or accommodation areas of companion animals" comprises any place where said companion animals is used to live such as boxes, kennels, doghouses, catteries, stables, pens or cages, laboratories keeping non-human animals, etc.

Within the context of the invention, the expressions "effective dose" or "effective amount" mean the quantity of the fast kill compound capable of eradicating fleas from the living or accommodation areas as above defined. For instance, a sufficient eradication is obtained when no more than 10 %, preferably at most 5 % of the dislodged fleas survive or when at least 90 %, preferably at least 95 % of the dislodged fleas are eradicated. The evaluation of the percentage (%) corresponds to the number of dislodged fleas that are killed or eliminated relative to the total number of fleas.

A "dislodged flea" according to the present invention corresponds to a flea which was in contact with the companion animal and has been dislodged by different causes such as scratching or grooming, or primary insecticide treatments. After the application of an insecticide treatment, comprising for instance an effective dose of a pyrethroid or a formamidine compound, the dislodged flea, while being knocked down, is not killed and still remains in the environment of the companion animal. As a consequence, the dislodged flea can recover from the knock-down effect and either reinfest the companion animal or different species, including humans. This phenomenon triggers the selection of fleas which are less susceptible to the pesticide. While breeding, the dislodged fleas can transmit their genes to their offspring, this flea population can gradually become resistant to the insecticide.

The invention also concerns a method for the eradication of fleas from the living or accommodation areas of companion animals comprising the step of administering topically a veterinary composition comprising an effective dose of a fast kill compound in a companion animal. In a preferred embodiment, the methods eradicate at least about 85 %, preferably at least about 90 %, more preferably at least about 95 % of fleas from the living or accommodation areas of companion animals.

In a particular embodiment, the composition of the invention further comprises an effective dose of a pyrethroid and/or a formamidine compound and/or an effective dose of an insect growth regulator.

Pyrethroid compounds are a class of compounds acting on the nervous system of insects, and disrupt the function of the neurons by interacting with sodium channels.

Examples of pyrethroid include one or more of etofenprox, permethrin, prallethrin, resmethrin, sumithrin, allethrin, alpha-cypermethrin, bifenthrin, beta-cypermethrin, cyfluthrin, cypermethrin, deltamethrin, flumethrin, esfenvalerate, lamdba-cyhalothrin, or zeta-cypermethrin, derivatives, metabolites or salts thereof. According to a particular embodiment, the pyrethroid compound is permethrin derivatives, metabolites or salts thereof.

Formamidine compounds are a class of compounds acting on the octopamine receptor and trehalase mRNA expressions. Examples of formamidine include one or more of amitraz, chlordimeform, formetanate, and formparanate derivatives, metabolites or salts thereof. According to a particular embodiment, the formamidine compound is amitraz derivatives, metabolites or salts thereof.

Within the context of the invention, the salts of the active compounds in the compositions of the invention correspond to its acceptable pharmaceutically salts. An acceptable pharmaceutically salt includes inorganic as well as organic acids salts. Representative examples of suitable inorganic acids include hydrochloric, hydrobromic, hydroiodic, phosphoric and the like. Representative examples of suitable organic acids include formic, acetic, trichloroacetic, propionic, benzoic, cinnamic, fumaric, maleic, methanesulfonic and the like.

Insect growth regulators (IGRs) are chemicals which inhibit the reproduction and development of insects. By way of examples, azadirachtin, hydroprene, methoprene, pyriproxyfen and triflumuron, may be cited. Preferably, the IGR is pyriproxyfen or methoprene. According to specific embodiment the IGR is pyriproxyfen.

In a particular embodiment, the composition comprises a neonicotinoid compound, preferably dinotefuran, a pyrethroid compound, preferably permethrin, and an insect growth regulator, preferably pyriproxyfen so that the weight ratio of the pyrethroid compound to the neonicotinoid compound ranges from 4 to 15, preferably from 6 to 9, more preferably from 7 to 8.

In a further particular embodiment, the composition comprises a neonicotinoid compound, preferably dinotefuran, a pyrethroid compound, preferably permethrin, and an insect growth regulator, preferably pyriproxyfen, so that the weight ratio of the insect growth regulator to the neonicotinoid compound ranges from 0.05 to 0.12, preferably from 0.06 to 0.1, more preferably from 0.07 to 0.09.

In a preferred embodiment, the composition comprises permethrin in a concentration range of about 60 to 95 %, dinotefuran in a concentration range of about 6 to 22 %, and pyriproxyfen in a concentration range of about 0.8 to 4 %. In a further preferred embodiment, the composition comprises permethrin in a concentration range of about 70 to 90 %, dinotefuran in a concentration range of about 8 to 15 %, and pyriproxyfen in a concentration range of about 0.9 to 1.5 %.

All percentages, unless otherwise specified, are on a weight basis and calculated with respect to the total weight of the named compounds.

In a further preferred embodiment, the composition comprises:
- about 20 to 50 %, preferably about 30 to 40 %, more preferably about 34 to 38 % by weight of permethrin,
- about 1 to 20 %, preferably about 1 to 10 %, more preferably about 3 to 7 % by weight of dinotefuran, and
- about 0.1 to 2 %, preferably about 0.1 to 1 %, more preferably about 0.2 to 0.6% by weight of pyriproxyfen,
relative to the total weight of the composition.

As used herein, the term "about" will be understood by a person of ordinary skill in the art and will vary to some extent on the context in which it is used. If there are uses of the term which are not clear to persons of ordinary skill in the art given the context in which it is used, "about" will mean up to plus or minus 20 %, preferably 10 % of the particular term.

The veterinary composition according to the present invention can be in any appropriate form to suit the requested administration modes, for instance topical, enteral, parenteral, or dermal application. According to the administration mode, the composition of the invention can be a spot-on, a pour-on, a line-on, a spray, a dip, an oral or an injectable composition.

In a preferred embodiment, the composition is in a form intended for topical application. In a more preferred embodiment, the composition of the invention is a pour-on, spot-on or a line-on composition.

The "spot-on" (or "drop spot") composition refers to a composition of topical use that is applied to only one spot of the body of the animal where the animal cannot lick the application area and is preferably localized between the animal's shoulders or neck. From this spot, the active ingredients spreads rapidly over the entire body surface, thereby providing generalized protection. The active ingredients distribute through the epidermis, accumulate in sebaceous glands, and are gradually released by the follicular ducts.

The "pour-on" or "line-on" composition refers to a composition of topical use that is continuously applied. The "pour-on" compositions are more particularly applied in big non-human mammals such as horses and cattle, and the "line-on" compositions are more particularly applied in small non-human mammals such as domestic animals including for instance dogs and cats. Particularly, the "pour-on" and "line-on" compositions are applied from the tail, along the backbone to the shoulders of the animal. More particularly, such compositions are applied against the grain of the animal.

A further object of the invention is therefore a method for the eradication of fleas from the living or accommodation areas of non-human mammals comprising the step of administering topically a veterinary composition of the invention in a companion animal.

A further object of the invention is also a method for the eradication of fleas from the living or accommodation areas of companion animals comprising the step of administering topically in a companion animal a veterinary composition comprising an effective dose of a fast kill compound, an effective dose of a pyrethroid and/or a formamidine compound and/or an effective dose of an insect growth regulator in a companion animal.

The compositions of the invention are preferably formulated in a dosage unit form depending on the weight and/or size of the companion animal wherein the integral dose is applied to the companion animal. Typically, the doses of the compositions can be in a range from 0.1 to 100 mL, preferably from 0.5 to 20 mL, and even more preferably from 0.5 to 10 mL. In the context of the companion animal is a dog, the dose is typically in a range from 0.5 to 10 mL. According to some particular embodiments, the compositions are applied at a dose in a range between about 0.05 and 0.6 mL/Kg of the companion animal's body weight.

Treatment can be repeated once a month, once every two months or once every three months.

As used herein, a "companion animal" comprises, without limitation, birds such as canaries, finches, lovebirds, caiques and cockatoos, and non-human mammal such as canidae, for instance dogs, foxes, coyotes, and wolfs, felidae, for instance cats, lions, and panthers, bovidae, for instance cattle and daily cow, equidae, for instance horses, and camelidae, for instance camel. In a particular embodiment, the companion animal is a dog or a cat, preferably a dog.

Massive flea infestations can induce severe anemia. Fleas are intermediate hosts of the cestode of cats and dogs and cause a large number of infestations such as tapeworm (*Dipylidium canimum*), filariae (*Dipetalonema reconditum*). Fleas are the vector of feline rickettsiosis (*Rickettsia felis*), of the cat scratch disease (*Bartonella henseale*), of the canine mycoplasmosis (*Mycoplasma haemocanis*) and of the feline mycoplamosis (*Mycoplasma haemofelis*). Some of these diseases such as bartonellosis or dipylidiosis can be zoonotic. The primary species of flea that infests dogs and cats is *Ctenocephalides felis.* Fleas have also been recently described as being involved in the transmission of feline leukemia and their possible participation in the epidemiology of canine leishmaniosis. Fleas are further implicated in Flea Allergy Dermatitis (FAD) in dogs and cats, which is caused by the action of saliva containing allergenic substances that cause intense skin reactions in hypertensive animals. Typical symptoms include erythema (redness), papules (bumps), pustules (pus-filled bumps), crusts (scabs), hair loss and eczematous skin rash. These symptoms will occur often in upper tail, neck, and down the back of the legs. There is no gender or age predisposition, but most cases occur in animals between two and five years of age.

In a preferred embodiment, eradicated fleas by the present invention are *Ctenocephalides felis.*

As above briefly detailed, fleas are well known to be responsible of many infestations. A flea eradication effect automatically reduces the risk for the companion animals to develop any diseases related or caused by fleas, preventing thereby any diseases caused or transmitted by fleas.

Accordingly, the invention concerns a composition as defined herein, for use for preventing any diseases caused by fleas, preferably allergy dermatitis, in a companion animal.

The invention also concerns a method for preventing any diseases caused by fleas, preferably allergy dermatitis, comprising administering of a composition as defined herein in a companion animal.

The invention further concerns a use of the composition as defined herein for the manufacture of a drug for preventing any diseases caused by fleas, preferably allergy dermatitis, in a companion animal.

In another embodiment, the fast kill compound including a neonicotinoid compound, a spinosyn compound and a pyridincarboxamid compound, the pyrethroid compound, the formamidine compound and the insect growth regulator as above defined, are in separate compositions.

A further object of the invention therefore concerns a use of a combination comprising (i) a fast kill compound including a neonicotinoid compound and/or a spinosyn compound and/or a pyridincarboxamid compound, (ii) a pyrethroid compound and/or a formamidine compound, and (iii) an insect growth regulator for the eradication of fleas from the living or accommodation areas of companion animals.

The present invention also provides a kit comprising an effective dose of a fast kill compound for use for the eradication of fleas from the living or accommodation areas of companion animals.

The present invention further provides a kit comprising one or several packaging units, said packaging units comprising an effective dose of a fast kill compound, a pyrethroid and/or formamidine compound and an insect growth regulator, as a combined preparation for simultaneous, separate or sequential use for the eradication of fleas from the living or accommodation areas of companion animals.

As used herein, the terms "separate" or "sequential" mean that the fast kill compound, the pyrethroid and/or formamidine compound and the insect growth regulator are administered successively. For instance, the fast kill compound or the composition comprising the fast kill compound is firstly administered in a companion animal, the pyrethroid and/or the formamidine compound or the composition comprising the pyrethroid and/or the formamidine compound is secondly administered in the same companion animal, and the insect growth regulator or the composition comprising the insect growth regulator is thirdly administered in the same companion animal. The administering order of said compounds can of course be interchanged. In this context, the fast kill compound, the pyrethroid compound and/or the formamidine compound, and the insect growth regulator are physically sufficiently distinct from being separately or sequentially administrable.

A further object of the invention is a kit as defined above, further comprising a package leaflet or user instruction including the information that said preparation is to be used for eradicating fleas from the living or accommodation areas of companion animals, preferably in a dog or a cat.

Further aspects and advantages of the invention will be disclosed in the following experimental section. The examples below illustrate the present invention and are given as non-limiting illustrations

### EXAMPLES

### Material and methods:

Sixteen "Beagle" dogs have been combed to ensure that they were free of fleas at day-8 and are randomly allocated to two groups (Groups 0 and 1). Each dog was housed to a pen measuring approximately 2.0 meters by 1.0 meter (L x W).

### Treatment

Treatments were administrated on day 0 with a topical combination for a minimal dose of 46.6 mg/kg permethrin and 0.60 mg/kg pyriproxyfen for group 0 (control group 0, i.e. without dinotefuran), and with a topical combination for a minimal dose of 6.4 mg/kg dinotefuran, 46.6 mg/kg permethrin and 0.57 mg/kg pyriproxyfen for group 1 (group 1 with dinotefuran).

### Flea infestation

One hundred unfed 1-2 weeks old adult *C. felis* will be placed on each animal on day -8 and two hundred unfed 1-2 weeks old adult *C. felis* will be placed on each animal on days 0 (+2 hours post dosing), 1, 7, 14, 21 and 28. Flea infestations are accomplished by placing fleas in the lumbar region of the dog and allowing the fleas to disperse within the hairs of the animal.

### Results

Dead or moribund or live fleas were collected and counted at the following points:
- Day 0: +2 h 30 min (± 5 min) and +4 h (± 15 min) after application of the treatment;
- Days 1, 7, 14, 21 and 28: +30 min (± 5 min) and + 2 h (± 5 min) after each infestation.

The results are represented in figures 1 and 2 and show that:
- the treatment without dinotefuran (group 0, curve with squares) gives a minimal survival rate % > 15 % (figure 1, Day 7) but is in most cases > 25 % (figure 1, Days 0, 1, 14, 21 and 28). Also, a number of 10-20 fleas keep on living after application of the treatment without dinotefuran (figure 2); and
- the treatment comprising dinotefuran (group 1, curve with diamonds) allows to kill the totality of the dislodged fleas up to 7 days and is continuously very efficient up to 28 days (figure 1: survival rate % between 0 and 10 %; figure 2: number of live dislodged between 0 and 3).

In view of such results the inventors have surprisingly demonstrated that the composition of the invention comprising dinotefuran was clearly more efficient than a composition without dinotefuran for killing dislodged fleas. The composition of the invention is therefore suitable for the eradication of fleas from living or accommodation areas of non-human mammals.

## Claims

1. A use of a veterinary composition comprising an effective dose of a fast kill compound for the eradication of fleas from the living or accommodation areas of companion animals.

2. The use according to claim 1, wherein the fast kill compound is a neonicotinoid, a spinosyn, and/or a pyridincarboxamid compound.

3. The use according to claim 1 and 2, wherein the neonicotinoid compound is dinotefuran, derivatives, metabolites or salts thereof.

4. The use according to any one of claims 1 to 3, wherein the composition further comprises an effective dose of a pyrethroid compound and/or an effective dose of a formamidine compound and/or an effective dose of an insect growth regulator, preferably an effective dose of a pyrethroid compound and/or an effective dose of an insect growth regulator.

5. The use according to any one of claims 1 to 4, wherein the weight ratio of the pyrethroid compound to the neonicotinoid compound ranges from 4 to 15, preferably from 6 to 9, more preferably from 7 to 8.

6. The use according to anyone of claims 1 to 5, wherein the weight ratio of the insect growth regulator to the neonicotinoid compound ranges from 0.05 to 0.12, preferably from 0.06 to 0.1, more preferably from 0.07 to 0.09.

7. The use according to anyone of claims 1 to 6, wherein the pyrethroid compound is permethrin, derivatives, metabolites or salts thereof.

8. The use according to anyone of claims 1 to 7, wherein the insect growth regulator is methoprene or pyriproxyfen, preferably pyriproxyfen.

9. The use according to any one of claims 1 to 8, wherein the composition is a spot-on, a pour-on or a line-on composition, preferably a spot-on composition.

10. The use according to any one of claims 1 to 9, wherein the companion animal is a dog or a cat, preferably a dog.

11. The use according to any one of claims 1 to 10, wherein the fleas are *Ctenocephalides felis.*

12. A method for the eradication of fleas from the living or accommodation areas of companion animals comprising the step of administering topically a veterinary composition as defined in any one of claims 1 to 11 in a companion animal.

13. A composition as defined in any one of claims 1 to 11 for use for preventing any diseases caused by fleas, preferably allergy dermatitis, in a companion animal.

14. A kit comprising one or several packaging units, said packaging units comprising a an effective dose of a fast kill compound, optionally a pyrethroid and/or a formamidine compound and/or an insect growth regulator, as a combined preparation for simultaneous, separate or sequential use for the eradication of fleas from the living or accommodation areas of companion animals.

15. A kit according to claim 14, wherein it further comprises a package leaflet or user instruction including the information that said preparation is to be used for eradicating fleas from the living or accommodation areas of companion animals, preferably in a dog or a cat.
